# FASCICULE DE BREVET EUROPEEN

(11) **EP 1 190 579 B1**
(45) Date de publication et mention de la délivrance du brevet: **24.03.2004**
(21) Numéro de dépôt: 00949585.4
(22) Date de dépôt: 29.06.2000
(51) Int. Cl.: H04N 7/52

(54) **PROCEDE DE CREATION DE BANDEAUX AUDIOVISUELS INTERACTIFS**
VERFAHREN ZUR ERZEUGUNG INTERAKTIVER AUDIO-VISUELLER STREIFEN
METHOD FOR GENERATING INTERACTIVE AUDIO-VISUAL STRIPS

(30) Priorité: 29.06.1999 FR 9908330
(43) Date de publication de la demande: 27.03.2002
(73) Titulaire: NPTV, 80080 Amiens (FR)
(72) Inventeur: CHOURAQUI, Laurent, F-75018 Paris (FR); CHOURAQUI, Jerôme, F-75017 Paris (FR); GRANGE, Etienne, F-75018 Paris (FR)
(74) Mandataire: Breese, Pierre
(86) Numéro de dépôt international: PCT/FR2000/001836
(87) Numéro de publication internationale: WO 2001/001700

(56) Documents cités:
- EP-A- 0 660 609
- EP-A- 0 891 081
- WO-A-96/34494
- FR-A- 2 728 089
- COLAITIS F: "LA NORME MHEG, VIDEO A LA DEMANDE ET TELEVISION INTERACTIVE. THE MHEG STANDARD FOR VIDEO ON DEMAND AND DIGITAL TELEVISION SERVICES" REE: REVUE GENERALE DE L'ELECTRICITE ET DE L'ELECTRONIQUE,FR,REVUE GENERALE DE L'ELECTRICITE S.A, no. 4, 1 octobre 1995 (1995-10-01), pages 33-39, XP000533328 ISSN: 1265-6534
- MEYER-BOUDNIK T ET AL: "MHEG EXPLAINED" IEEE MULTIMEDIA,US,IEEE COMPUTER SOCIETY, vol. 2, no. 1, 21 mars 1995 (1995-03-21), pages 26-38, XP000500084 ISSN: 1070-986X

## Description

La présente invention concerne le domaine des émissions télévisées, et plus particulièrement les émissions offrant une interactivité avec le téléspectateur.

L'invention sera décrite plus précisément pour les publicités, mais sa portée s'étend à toute transmission d'éléments visuels ou graphiques par un moyen de communication.

Les systèmes de télévision numérique nécessitent l'usage d'un décodeur spécifique permettant la visualisation des images diffusées par satellite ou par câble et comportant des éléments logiciels. Ces éléments logiciels permettent de superposer à l'image diffusée des éléments spécifiques d'informations ou promotionnels et d'effectuer des liaisons à des bases de données par un modem, par exemple.

Un affichage spécifique informe le téléspectateur de la possibilité d'obtenir des informations complémentaires et une action de sa part déclenche le déroulement de la séquence spécifique. A ce moment, l'affichage du flux vidéo est arrêté : une image fixe, en diffusion cyclique sur le signal diffusé est chargée puis affichée à l'écran. Cette image promotionnelle sert de support afin d'afficher des informations supplémentaires, sous forme de texte à l'aide du circuit OSD (On Screen Display) du décodeur. Ce circuit permet d'afficher du texte et des icônes en surimpression d'un flux vidéo classique avec la possibilité d'utiliser des couleurs de transparence.

Il est également possible d'arrêter l'affichage du flux vidéo, et éventuellement le flux sonore. Une image de promotion, en diffusion cyclique sur le flux satellite est chargée puis affichée à l'écran. Cette image sert de fond à des informations supplémentaires diffusées sous forme de texte et d'icônes (animées ou fixes), et scénarisées :

Les scénarii peuvent être linéaires ; une simple suite d'informations que le téléspectateur peut faire défiler à son rythme à l'aide de la télécommande. Ces informations peuvent être également scénarisées sous forme de questionnaire, lui permettant de participer à des jeux concours, d'être sélectionné pour des animations etc. Ces scénarii sont définis avec l'annonceur et ne sont pas fermés dans leur évolution.

Cependant, la programmation des applications d'affichage des publicités est fastidieuse : elles sont souvent similaires et ne se distinguent que par le contenu textuel et la position à l'écran. Cela nécessite de multiples essais et des recompilations afin de positionner correctement le texte et les icônes. De plus, le fait de devoir modifier le code du programme à chaque nouvelle publicité augmente le risque d'introduire de nouvelles erreurs.

On connaît également le brevet PCT WO96/34494 décrivant un procédé assurant l'acheminement d'informations pour un utilisateur incluant des informations confidentielles ou d'autres informations, à destination d'un vendeur dans des conditions sûres sans qu'il soit nécessaire à l'utilisateur de transmettre des informations dans des conditions sûres. L'utilisateur fournit un identificateur d'utilisateur et des informations incluant des informations confidentielles à un collecteur de réponse, lequel établit la liaison entre l'identificateur d'utilisateur et les informations d'utilisateur. Le collecteur de réponse peut vérifier les informations pour se prémunir contre la fraude. Un fournisseur d'information fournit un identificateur d'application et des informations de routage de vendeur a un collecteur de réponse, lequel établit la liaison entre les informations de routage de vendeur et l'identificateur d'application. L'identificateur d'application correspondant au vendeur est diffusé à l'utilisateur à l'aide d'une application de système d'information interactif et ce système d'information interactif envoie l'identificateur d'application, un identificateur d'utilisateur et d'autres informations de réponse à un collecteur de réponse conformément aux instructions de l'utilisateur et de l'application de système d'information interactif. Le collecteur de réponse peut ensuite acheminer l'information de l'utilisateur et les autres informations de réponse en direction du vendeur conformément aux informations de routage du vendeur. L'utilisateur peut envoyer des réponses anonymes de la même manière sans envoyer l'identificateur d'utilisateur au collecteur de réponse.

L'invention permet de résoudre ces problèmes en proposant un procédé et un dispositif permettant de créer facilement ces séquences publicitaires. Elle utilise des outils graphiques qui donnent la possibilité d'évaluer directement le résultat des manipulations sur les textes et les images à l'écran.

L'invention concerne ainsi un procédé de transmission d'une émission télévisée numérique tel que défini dans la revendication 1.

Avantageusement, le poids des composants élémentaires est inférieur à 10000 octets.

De manière préférentielle les composants élémentaires appartiennent à des classes prédéfinies d'éléments graphiques permettant de définir une image et sont mémorisés suivant leur classe d'appartenance.

La mémorisation des composants élémentaires peut se faire de manière séquentielle dans une classe ou suivant leur ordre d'utilisation dans la construction des images animées. Préférentiellement, on combine ces deux solutions en mémorisant les composants élémentaires suivant leur classe et séquentiellement dans leur classe, dans l'ordre de leur utilisation dans la construction des images animées.

Dans une variante avantageuse, les composants élémentaires sont affichés par une interface spécifique présente dans le décodeur numérique.

L'invention concerne également un dispositif de réalisation de séquences publicitaires interactives tel que défini dans la revendication 7.

Enfin, l'invention concerne également un décodeur numérique de signal vidéo composite tel que défini dans la revendication 8.

L'invention sera mieux comprise par la description détaillée qui suit.

Un logiciel spécifique a été créé afin de mettre en oeuvre le procédé selon l'invention.

Un éditeur permet de créer visuellement et facilement un fichier de données, décrivant le contenu et le comportement d'une application de publicité interactive.

Un programme d'exécution autonome chargé dans le terminal numérique a pour but de récupérer les données créées par le précédent éditeur et diffusées sur le flux satellite. Ces données sont ensuite interprétées par ce programme afin d'afficher les informations publicitaires.

L'éditeur est programmé dans un langage du type Java (marque déposée), ce qui donne la possibilité d'être exploité sur n'importe quelle plate-forme actuelle, intégrant une machine virtuelle Java.

Cet éditeur est un outil visuel qui permet de créer facilement différents écrans, composés de composants élémentaires tels que les bandeaux, les textes, les icônes, les formes géométriques. Tous ces objets peuvent être simplement placés à l'aide du glisser-déposer. La vision du résultat est immédiate. En complément de ces objets graphiques, l'éditeur peut affecter à ces écrans différents stimuli et actions.

Les stimuli sont les suivants :
- Pression sur une touche quelconque de la télécommande ou du panneau frontal (avec option de mémorisation de la touche dans une zone mémoire à transmettre par modem. Ceci permet d'implémenter les questionnaires à choix multiples).
- Événements liés à une horloge (en option la durée d'activation de l'horloge).
- Événements liés à la fin d'une connexion du modem.
- Début d'une saisie (en option le type de saisie : saisie de texte, de date).
- Fin d'une saisie.
- Top de synchronisation.

Chaque stimulus peut déclencher l'une des actions suivantes :
- Visualiser une application interactive autonome quelconque permettant par exemple d'accéder à une boutique.
- Visualiser une chaîne quelconque (en option le numéro de chaîne).
- Connexion du modem.
- Changer d'écran (en option on donne l'identifiant de l'écran).
- Quitter l'application.

L'ensemble de ces stimuli et actions permettent de créer un chemin de navigation entre les écrans. Tout type de navigation peut être créé. Ce type d'architecture laisse la possibilité de créer des chemins de navigations plus complexes,

Le format de données est composé de différentes classes de composants ou structures. Ces structures sont organisées de la façon suivante :

| INITIALISATIONS |
|---|
| DRAWS |
| Draw 1 |
| Draw 2 |
| ... |
| Draw n |

| PALETTES |
|---|
| Palette 1 |
| Palette 2 |
| ... |
| Palette n |

| SCREENS |
|---|
| Screen 1 |
| Screen 2 |
| ... |
| Screen n |

Les données permettant l'affichage d'une séquence publicitaire sont organisées selon un format spécifique et comportant toutes les données nécessaires au fonctionnement d'une application de ce type. Chaque donnée ayant un effet visuel ou auditif est considérée comme un composant élémentaire. Les composants élémentaires nécessitant un traitement commun sont regroupés en classes de composants. Les composants élémentaires comprennent les textes, icônes, leur positionnement, les stimulus, les actions, les informations de navigations et tout élément visuel ou auditif complémentaire. Il est possible de traiter les icônes comme des ensembles comportant des composants élémentaires plus précis, comme la couleur, la forme, les lignes géométriques contenues dans l'icône.

Les INITIALISATIONS comportent l'emplacement dans la structure de données des DRAWS, PALETTES et SCREENS.

Les DRAWS sont des représentations graphiques : du texte, des formes géométriques, des lignes, des points, des changements de couleurs, de fontes, d'épaisseur de traits. Ils sont matérialisés dans la structure sous forme de codes faisant appel à des fonctions natives du langage hôte du terminal numérique.

Les PALETTES sont des palettes de couleurs et définissent une classe particulière de composants élémentaires. Pour chaque application, il est possible de définir une ou plusieurs palette différente. Cette structure contient les composantes Rouge, Vert, Bleu et Alpha (transparence) pour chaque couleur de la palette.

Les SCREENS sont des descriptions d'écrans. Ces structures sont une énumération de DRAWS qui composent un écran. De plus, pour chaque SCREEN, on peut lui associer une série de stimuli et d'actions. Ces éléments sont également matérialisés sous forme de codes faisant appels à des fonctions natives.

Un programme spécifique est chargé de récupérer la structure des données sur le flux satellite afin de l'interpréter.

Ce programme d'exécution va, après avoir récupéré les données, les interpréter. Pour cela, il repère dans les INITIALISATIONS les emplacements des SCREENS, PALETTES, et DRAWS. Il crée ensuite la palette avec celle présente dans les données. L'étape suivante consiste à afficher le premier écran par défaut :

Connaissant la position des SCREENS, il repère le premier de l'application, regarde les DRAWS qui le compose et affiche ces DRAWS. Il repère ensuite les stimuli associés à cet écran. Il se met ensuite en attente de ceux-ci. Lorsque l'un des stimuli est détecté, le programme regarde l'action qui lui est associée. Il exécute cette action.

De cette façon, l'application peut progresser d'écrans en écrans, effectuer les différentes actions expliquées précédemment. On peut donc créer des applications complexes comportant plus d'écrans, des jeux, diverses saisies, des connexions modems.

## Revendications

1. Procédé de transmission d'une émission télévisée numérique comportant des séquences de publicité interactives activables au moins en partie par le téléspectateur, comportant une étape de construction d'une image animée par superposition d'un fond d'images animées correspondant à l'émission principale et d'une image regroupant une partie au moins des composants élémentaires, par un programme d'exécution chargé dans le terminal numérique, **caractérisé en ce que** qu'il comporte une étape de transmission de composants publicitaires élémentaires matérialisés sous forme de codes faisant appels à des fonctions natives, comprenant des composants de type « INITIALISATIONS » définissant l'emplacement dans la structure de données des autres composants, des composants de type « DRAWS » correspondant à des représentations graphiques telles que du texte, des formes géométriques, des lignes, des points, des changements de couleurs, de fontes, d'épaisseur de traits, et matérialisés dans la structure sous forme de codes faisant appel à des fonctions natives du langage hôte du terminal numérique, des composants de type «PALETTES » correspondant à des palettes de couleurs et des composants de type « SCREENS » correspondant à des descriptions d'écrans.

2. Procédé de transmission d'une émission télévisée numérique selon la revendication 1 **caractérisé en ce que** le poids des composants élémentaires est inférieur à 10000 octets.

3. Procédé de transmission d'une émission télévisée numérique selon l'une quelconque des revendications précédentes **caractérisé en ce que** les composants élémentaires appartiennent à des classes prédéfinies d'éléments graphiques permettant de définir une image et **en ce que** lesdits composants élémentaires sont mémorisés suivant leur classe d'appartenance.

4. Procédé de transmission d'une émission télévisée numérique selon la revendication 3 **caractérisé en ce que** les composants élémentaires sont mémorisés séquentiellement dans leur classe, dans l'ordre de leur utilisation dans la construction des images animées.

5. Procédé de transmission d'une émission télévisée numérique selon la revendication 3 ou 4 **caractérisé en ce que** l'affichage des composants élémentaires est effectué selon les classes d'appartenance et suivant des moyens prédéfinis pour chaque classe.

6. Procédé de transmission d'une émission télévisée numérique selon l'une quelconque des revendications 3 à 5 **caractérisé en ce que** les composants élémentaires sont affichés par une interface spécifique présente dans le décodeur numérique.

7. Dispositif de réalisation de séquences publicitaires interactives comprenant des moyens d'affichage des images animées d'origine et des moyens d'affichage de la séquence publicitaire créée, **caractérisé en ce qu'**il comporte une interface de création d'écrans publicitaires dans lequel les composants publicitaires élémentaires, consistant en des codes faisant appels à des fonctions natives, comprenant des composants de type « INITIALISATIONS » définissant l'emplacement dans la structure de données des autres composants, des composants de type « DRAWS » correspondant à des représentations graphiques telles que du texte, des formes géométriques, des lignes, des points, des changements de couleurs, de fontes, d'épaisseur de traits, et matérialisés dans la structure sous forme de codes faisant appel à des fonctions natives du langage hôte du terminal numérique, des composants de type «PALETTES » correspondant à des palettes de couleurs et des composants de type « SCREENS » correspondant à des descriptions d'écrans, sont matérialisés graphiquement afin de permettre la mise en place des éléments graphiques à afficher.

8. Décodeur numérique de signal vidéo composite **caractérisé en ce qu'**il comporte des moyens pour séparer le signal vidéo des composants publicitaires élémentaires, consistant en des codes faisant appels à des fonctions natives, comprenant des composants de type « INITIALISATIONS » définissant l'emplacement dans la structure de données des autres composants, des composants de type « DRAWS » correspondent à des représentations graphiques telles que du texte, des formes géométriques, des lignes, des points, des changements de couleurs, de fontes, d'épaisseur de traits, et matérialisés dans la structure sous forme de codes faisant appel à des fonctions natives du langage hôte du terminal numérique, des composants de type «PALETTES » correspondant à des palettes de couleurs et des composants de type « SCREENS » correspondant à des descriptions d'écrans, des moyens pour mémoriser lesdits composants élémentaires et des moyens pour calculer une image résultant de la combinaison desdits composants élémentaires.

## Claims

1. Transmission procedure for a digital televised programme featuring interactive advertising sequences that can be activated, at least partially by the viewer, comprising a step wherein an animated image is created by the superposition of an animated background image corresponding to the main programme and an image including at least part of the elementary components, by means of an execution programme loaded into the digital terminal, **characterised in that** it comprises a step wherein elementary advertising components are transmitted in the form of codes calling native functions, comprising "INITIALISATION" type components, defining the position in the data structure of the other components, "DRAW" type components corresponding to graphical representations such as text, geometrical forms, lines, points, changes of colours, fonts, line thicknesses, and which appear in the structure in the form of codes which call on native functions of the host language of the digital terminal, "PALETTE" type components, corresponding to colour palettes and "SCREEN" type components, corresponding to screen descriptions.

2. Transmission procedure for a digital televised programme of claim 1, **characterised in that** the size of the elementary components is less than 10,000 octets.

3. Transmission procedure for a digital televised programme of any one of the previous claims, **characterised in that** the elementary components belong to predefined classes of graphical elements permitting an image to be defined and **in that** the said elementary components are memorised according to the class to which they belong.

4. Transmission procedure for a digital televised programme of claim 3, **characterised in that** the elementary components are memorised sequentially in their class, in the order of their use in the creation of the animated images.

5. Transmission procedure for a digital televised programme of claim 3 or 4, **characterised in that** the elementary components are displayed according to the classes they belong to and according to predefined means for each class.

6. Transmission procedure for a digital televised programme of any one of claims 3 to 5, **characterised in that** the elementary components are displayed by a specific interface present in the digital decoder.

7. Device for making interactive advertising sequences comprising means for displaying original animated images and means for displaying the advertising sequence created, **characterised in that** it comprises an advertising screen creation interface in which the elementary advertising components consisting of codes calling native functions, comprising "INITIALISATION" type components, defining the position in the data structure of the other components, "DRAW" type components corresponding to graphical representations such as text, geometrical forms, lines, points, changes of colours, fonts, line thicknesses, and which appear in the structure in the form of codes which call on native functions of the host language of the digital terminal, "PALETTE" type components, corresponding to colour palettes and "SCREEN" type components, corresponding to screen descriptions, are shown graphically in order to allow the graphical elements to be displayed to be positioned.

8. Composite video signal digital decoder **characterised in that** it comprises means for separating the video signal from the elementary advertising components, consisting of codes calling native functions, comprising "INITIALISATION" type components, defining the position in the data structure of the other components, "DRAW" type components corresponding to graphical representations such as text, geometrical forms, lines, points, changes of colours, fonts, line thicknesses, and which appear in the structure in the form of codes which call on native functions of the host language of the digital terminal, "PALETTE" type components corresponding to colour palettes and "SCREEN" type components, corresponding to screen descriptions, means for memorising the said elementary components and means for calculating an image resulting from the combination of the said elementary components.

## Patentansprüche

1. Verfahren der Übertragung von einer digitalen Fernsehsendung mit interaktiven Werbesequenzen, die wenigstens zum Teil vom Fernsehzuschauer aktivierbar sind, mit einer Etappe der Konstruktion eines bewegten Bildes durch Überlagerung eines Hintergrundes aus bewegten Bildern, die der Hauptsendung entsprechen, und eines Bildes, das mindestens einen Teil der elementaren Komponenten aufweist, durch ein im digitalen Terminal geladenes Steuerprogramm, **dadurch gekennzeichnet, dass** es eine Etappe der Übertragung von elementaren Werbekomponenten aufweist, die in Form von Codes materialisiert sind, die native Funktionen aufrufen, mit Komponenten des Typs "INITIALISIERUNGEN", die den Platz in der Struktur der Daten von den anderen Komponenten definieren, mit Komponenten des Typs "DRAWS", die grafischen Darstellungen wie Text, geometrische Formen, Linien, Punkte, Änderungen von Farben, Schriftarten und Strichdicken entsprechen, und die in der Struktur in Form von Codes materialisiert sind, die native Funktionen der Host-Sprache des digitalen Terminals aufrufen, mit Komponenten des Typs "PALETTEN", die Farbpaletten entsprechen und mit Komponenten des Typs "SCREENS", die Beschreibungen von Bildschirmen entsprechen.

2. Verfahren der Übertragung von einer digitalen Fernsehsendung nach Anspruch 1, **dadurch gekennzeichnet, dass** die Masse der elementaren Komponenten unter 10000 Bytes liegt.

3. Verfahren der Übertragung von einer digitalen Fernsehsendung nach einem der vorhergehenden Ansprüche, **dadurch gekennzeichnet, dass** die elementaren Komponenten zu vordefinierten Klassen grafischer Elemente gehören, die es ermöglichen, ein Bild zu definieren und **dadurch gekennzeichnet, dass** die vorgenannten elementaren Komponenten entsprechend ihrer Zugehörigkeitsklasse gespeichert werden.

4. Verfahren der Übertragung von einer digitalen Fernsehsendung nach Anspruch 3, **dadurch gekennzeichnet, dass** die elementaren Komponenten sequentiell in ihrer Klasse gespeichert werden, und zwar gemäß ihrer Reihenfolge ihrer Anwendung in der Konstruktion der bewegten Bilder.

5. Verfahren der Übertragung von einer digitalen Fernsehsendung nach Anspruch 3 oder 4, **dadurch gekennzeichnet, dass** die Anzeige der elementaren Komponenten entsprechend der Zugehörigkeitsklasse und anhand von für jede Klasse vordefinierten Mitteln erfolgt.

6. Verfahren der Übertragung von einer digitalen Fernsehsendung nach einem der Ansprüche 3 bis 5, **dadurch gekennzeichnet, dass** die elementaren Komponenten durch eine spezifische Schnittstelle angezeigt werden, die im digitalen Decoder vorhanden ist.

7. Vorrichtung zur Realisierung von interaktiven Werbesequenzen mit Mitteln zur Anzeige der ursprünglichen bewegten Bilder und mit Mitteln zur Anzeige der ausgearbeiteten Werbesequenz, **dadurch gekennzeichnet, dass** sie eine Schnittstelle zur Ausarbeitung von Werbebildschirmen aufweist, in der die elementaren Werbekomponenten, bestehend aus Codes, die native Funktionen aufrufen, mit Komponenten des Typs "INITIALISIERUNGEN", die den Platz in der Struktur der Daten von den anderen Komponenten definieren, mit Komponenten des Typs "DRAWS", die grafischen Darstellungen wie Text, geometrische Formen, Linien, Punkte, Änderungen von Farben, Schriftarten und Strichdicken entsprechen, und die in der Struktur in Form von Codes materialisiert sind, die native Funktionen der Host-Sprache des digitalen Terminals aufrufen, mit Komponenten des Typs "PALETTEN", die Farbpaletten entsprechen und mit Komponenten des Typs "SCREENS", die Beschreibungen von Bildschirmen entsprechen, grafisch materialisiert sind, um die Einrichtung der grafischen anzuzeigenden Elemente zu ermöglichen.

8. Digitaler Decoder zusammengesetzter Videosignale **dadurch gekennzeichnet, dass** er Mittel aufweist, um das Videosignal von den elementaren Werbekomponenten zu trennen, die aus Codes bestehen, die native Funktionen aufrufen, mit Komponenten des Typs "INITIALISIERUNGEN", die den Platz in der Struktur der Daten von den anderen Komponenten definieren, mit Komponenten des Typs DRAWS", die grafischen Darstellungen wie Text, geometrische Formen, Linien, Punkte, Änderungen von Farben, Schriftarten und Strichdicken entsprechen, und die in der Struktur in Form von Codes materialisiert sind, die native Funktionen der Host-Sprache des digitalen Terminals aufrufen, mit Komponenten des Typs "PALETTEN", die Farbpaletten entsprechen und mit Komponenten des Typs "SCREENS", die Beschreibungen von Bildschirmen entsprechen, mit Mitteln, um die besagten elementaren Komponenten zu speichern und mit Mitteln, um ein Bild zu berechnen, das sich aus der Kombination besagter elementarer Komponenten ergibt.
